# EUROPEAN PATENT APPLICATION

(11) **EP 4 685 085 A1**
(43) Date of publication of application: **28.01.2026**
(21) Application number: 25187412.9
(22) Date of filing: 03.07.2025
(51) Int. Cl.: B65G 15/42, B65G 47/53

(54) **DIVERTING MECHANISM FOR A CONVEYOR**

(30) Priority: 23.07.2024 US 202418781425
(71) Applicant: Intelligrated Headquarters LLC, Mason, OH 45040 (US)
(72) Inventor: HARAPAT, Jan, Charlotte, 28202 (US); MENOUSEK, Martin, Charlotte, 28202 (US); KAZDA, Jan, Charlotte, 28202 (US)
(74) Representative: Haseltine Lake Kempner LLP

(57) **Abstract**

Embodiments of the present disclosure provide a diverting mechanism for a conveyer. In one embodiment, an apparatus includes a first wheel, a driving gear, a belt stretched around the first wheel and the driving gear, the belt comprising one or more first geometrical features configured to move an object in a first direction while the belt is rotating in a first rotational direction and one or more second geometrical features configured to move the object in a second direction while the belt is rotating in a second rotational direction, wherein the driving gear is configured to rotate the belt in the first rotational direction and the second rotational direction, and an angle adjustment component configured to adjust an angular orientation of at least a portion of the belt based at least in part on whether the belt is rotating in the first rotational direction or the second rotational direction.

## Description

### TECHNOLOGICAL FIELD

Example embodiments of the present disclosure relate generally to conveyor systems and, more particularly, to a diverting mechanism for the conveyor systems thereof.

### BACKGROUND

Conveyors are widely used in various industrial applications that demand transportation of packages from one place to another place. A conveyor comprises rollers and belts to carry and transfer the packages at different locations. The rollers and belts are traditionally built to carry the packages upstream or downstream in an industrial space. However, in many industrial processes, there comes a requirement of diverting the packages from one conveyor to another conveyor or even changing the package direction to single or multiple locations. Conventional pushing mechanisms and lane guiding units that are used to direct the movement of packages in a desired direction are mechanically complex and difficult to maintain. Additionally, such conventional mechanisms may divert packages with a high degree of force, risking damage to diverted packages.

Applicant has identified numerous areas of improvement in the existing technologies and processes, which are the subjects of embodiments described herein. Through applied effort, ingenuity, and innovation, many of these deficiencies, challenges, and problems have been solved by developing solutions that are included in embodiments of the present disclosure, some examples of which are described in detail herein.

### BRIEF SUMMARY OF THE INVENTION

The following presents a simplified summary in order to provide a basic understanding of some aspects of the present disclosure. This summary is not an extensive overview and is intended to neither identify key or critical elements nor delineate the scope of such elements. Its purpose is to present some concepts of the described features in a simplified form as a prelude to the more detailed description that is presented later.

In an example embodiment, an apparatus is disclosed. The apparatus includes a first wheel; a driving gear; a belt stretched around the first wheel and the driving gear, the belt comprising one or more first geometrical features configured to move an object in a first direction while the belt is rotating in a first rotational direction and one or more second geometrical features configured to move the object in a second direction while the belt is rotating in a second rotational direction, wherein the driving gear is configured to rotate the belt in the first rotational direction and the second rotational direction; and an angle adjustment component configured to adjust an angular orientation of at least a portion of the belt based at least in part on whether the belt is rotating in the first rotational direction or the second rotational direction.

In some embodiments, the apparatus further includes a frame that is physically coupled with (i) the first wheel via an axel of the first wheel and (ii) the driving gear via an axel of the driving gear, wherein the angle adjustment component adjusts the angular orientation of the at least the portion of the belt by adjusting an orientation of the frame. In some embodiments the one or more first geometrical features comprise a first plurality of cleats of variable thickness and the one or more second geometrical features comprise a second plurality of cleats of variable thickness.

In some embodiments, a thinnest cleat of the first plurality of cleats has a thickness of at least 1mm and up to 10mm, and wherein a thickest cleat of the first plurality of cleats has a thickness of at least 10mm and up to 50mm. In some embodiments, a thinnest cleat of the second plurality of cleats has a thickness of at least 1mm and up to 10mm, and wherein a thickest cleat of the second plurality of cleats has a thickness of at least 10mm and up to 50mm.

In some embodiments, respective thicknesses of each cleat in the first plurality of cleats incrementally increase in an anticlockwise direction around the belt. In some embodiments, respective thicknesses of each cleat in the second plurality of cleats incrementally decrease in the anticlockwise direction around the belt. In some embodiments, a difference between a thickness of adjacent cleats is at least 0mm and up to 5mm.

In some embodiments, the one or more first geometrical features are configured to maintain an orientation of the object while diverting the object from a first conveyer to a second conveyer. In some embodiments, the apparatus further includes a second wheel. In some embodiments, a position of the first wheel is lower than a position of the second wheel in a first angular configuration for diverting the object in the first direction. In some embodiments, the position of the first wheel is higher than the position of the second wheel in a second angular configuration for diverting the object in the second direction.

In some embodiments, a position of the first wheel is lower than a position of the second wheel. In some embodiments, a height difference between the first wheel and the second wheel defines a first angle relative to a horizontal plane. In some embodiments, the first plurality of cleats collectively defines a second angle relative to the belt, and the first angle corresponds to the second angle. In some embodiments, the driving gear is configured to drive the first wheel and the second wheel by rotating the belt in a clockwise or an anticlockwise direction. In some embodiments, the belt defines a width, wherein a width of the one or more first geometrical features is within 10-100mm of the width of the belt.

In some embodiments, each of the first plurality of cleats is spaced apart from an adjacent cleat by a distance, wherein the distance is at least 1mm and up to 100mm. In some embodiments, the belt defines a circumference, wherein a first portion of the belt comprises the one or more first geometrical features and a second portion of the belt adjacent to the first portion comprises the one or more second geometrical features. In an example embodiment, a conveyer system is disclosed. The conveyer system includes a diverting mechanism. The diverting mechanism includes a first wheel, a driving gear, and a belt stretched around the first wheel and the driving gear. The belt may have a first plurality of cleats configured to move an object in a first direction and a second plurality of cleats configured to move the object in a second direction opposite the first direction. The conveyer system may include one or more idler rollers installed between at least two longitudinal frames for carrying the object in a third direction perpendicular to the first direction and the second direction. The first plurality of cleats is positioned at least partially above the one or more idler rollers for a duration to move the object in the first direction.

In some embodiments, the conveyer system may include a frame that is physically coupled with (i) the first wheel via an axel of the first wheel and (ii) the driving gear via an axel of the driving gear, wherein an angle adjustment component adjusts an angular orientation of at least a portion of the belt by adjusting an orientation of the frame. In some embodiments, a thinnest cleat of the first plurality of cleats has a thickness of at least 1mm and up to 10mm, and wherein a thickest cleat of the first plurality of cleats has a thickness of at least 10mm and up to 50mm.

In some embodiments, a thinnest cleat of the second plurality of cleats has a thickness of at least 1mm and up to 10mm, and wherein a thickest cleat of the second plurality of cleats has a thickness of at least 10mm and up to 50mm. In some embodiments, respective thicknesses of each cleat in the first plurality of cleats incrementally increase in an anticlockwise direction around the belt. In some embodiments, respective thicknesses of each cleat in the second plurality of cleats incrementally decrease in the anticlockwise direction around the belt.

In some embodiments, a difference between a thickness of adjacent cleats is at least 0mm and up to 5mm. In an example embodiment, a diverting mechanism for a conveyor is disclosed. The diverting mechanism for a conveyor comprising a first wheel, a driving wheel, and at least one belt. Further, the at least one belt is stretched around the first wheel and the driving gear. The at least one belt having a plurality of cleats of variable thickness. Further, the driving gear is configured to rotate the at least one belt.

In some embodiments, a thinnest cleat of the plurality of cleats has a thickness of at least 1mm and up to 10mm. In some embodiments, a thickest cleat of the plurality of cleats has a thickness of at least 10mm and up to 50mm. In some embodiments, the plurality of cleats collectively defines a first end and a second end, and the plurality of cleats defines a gradient such that the thickness of each of the cleats sequentially increases from the first end to the second end.

In some embodiments, a difference between the thickness of adjacent cleats is at least 0mm and up to 5mm. In some embodiments, the difference between the thickness of each of the plurality of cleats allows the diverting mechanism to divert one or more packages by maintaining orientation of the one or more packages. In some embodiments, the further comprising a second wheel. Further, a position of the first wheel is higher than a position of the second wheel. Further, a height difference between the first wheel and the second wheel defines a first angle relative to a horizontal plane. The plurality of cleats of variable thickness collectively defines a second angle relative to a main body of the at least one belt. The first angle corresponds to the second angle.

In some embodiments, the at least one belt defines a width. In some embodiments, a width of each of the plurality of cleats is between 10-100mm of the width of the at least one belt. In some embodiments, each of the plurality of cleats is spaced apart from an adjacent cleat by a distance and the distance is at least 1mm and up to 100mm. In some embodiments, the at least one belt defines a circumference. Further, a first portion of the at least one belt comprises the plurality of cleats and a second portion of the at least one belt does not comprise the plurality of cleats. In some embodiments, a length of the first portion is less than a length of the second portion.

In some embodiments, the first wheel is further connected to a second wheel via the at least one belt such that the first portion and the second portion of the at least one belt is disposed between the first wheel and the second wheel. In some embodiments, the driving gear is configured to drive the first wheel and the second wheel by rotating the at least one belt in clockwise or anticlockwise direction.

In some embodiments, the diverting mechanism is configured to operate in a diverting mode and in a non-diverting mode. In some embodiments, when the diverting mechanism is operating in the diverting mode, the at least one belt is rotating around the first wheel and the driving gear such that each of the plurality of cleats are position over the first wheel, the driving gear, or both. In some other embodiments, when the diverting mechanism is operating in the non-diverting mode, the at least one belt is positioned such that each of the plurality of cleats is positioned below the first wheel, the driving gear, or both.

In another example embodiment, a conveyer system is disclosed. The conveyor system comprising a diverting mechanism. The diverting mechanism comprises a first wheel, a driving gear, and at least one belt that is stretched around the first wheel and the driving gear. The at least one belt having a plurality of cleats of variable thickness. Further, the conveyer system comprises one or more idler rollers installed between at least two longitudinal frames for carrying one or more packages. Further, the plurality of cleats is positioned at least partially above the one or more idler rollers to divert the one or more packages when the diverting mechanism is in a diverting mode.

In some embodiments, the plurality of cleats is made from a material selected from a group of materials of rubber, polymer, plastic, steel, or wood.

The above summary is provided merely for purposes of summarizing some example embodiments to provide a basic understanding of some aspects of the present disclosure. Accordingly, it will be appreciated that the above-described embodiments are merely examples and should not be construed to narrow the scope or spirit of the present disclosure in any way. It will be appreciated that the scope of the present disclosure encompasses many potential embodiments in addition to those here summarized, some of which will be further described below.

### BRIEF DESCRIPTION OF THE DRAWINGS

Having thus described certain example embodiments of the present disclosure in general terms, reference will hereinafter be made to the accompanying drawings, which are not necessarily drawn to scale, and wherein:
FIG. 1 illustrates an isometric view of a conveyor system in accordance with an example embodiment of the present disclosure;
FIG. 2A illustrates an isometric view of the conveyor system with a diverting mechanism, in accordance with an example embodiment of the present disclosure;
FIG. 2B illustrates a side view of the diverting mechanism, in accordance with an example embodiment of the present disclosure;
FIG. 2C illustrates an exploded view of the diverting mechanism, in accordance with an example embodiment of the present disclosure;
FIG. 2D illustrates at least one belt stretched around a first wheel and a second wheel of the diverting mechanism, in accordance with an example embodiment of the present disclosure;
FIGS. 3A-3C illustrate side views of operation of the diverting mechanism in a diverting mode, in accordance with an example embodiment of the present disclosure;
FIGS. 4A-4C illustrate isometric views of operation of the diverting mechanism in the diverting mode, in accordance with an example embodiment of the present disclosure;
FIGS. 5A-5C illustrate other side views of operation of the diverting mechanism in the diverting mode, in accordance with an example embodiment of the present disclosure;
FIG. 6 illustrates another embodiment of the diverting mechanism comprising a plurality of other cleats and at least one pair of sidewalls monolithic with the at least one belt, in accordance with an example embodiment of the present disclosure;
FIG. 7 illustrates another embodiment of the diverting mechanism comprising a plurality of another cleats, in accordance with an example embodiment of the present disclosure; and
FIG. 8 illustrates a side view of another embodiment of the diverting mechanism that includes a tilting functionality for diverting packages in either a first or second direction, in accordance with an example embodiment of the present disclosure.

### DETAILED DESCRIPTION

Some embodiments will now be described more fully hereinafter with reference to the accompanying drawings, in which some, but not all, embodiments of the present disclosure are shown. Indeed, various embodiments may be embodied in many different forms and should not be construed as limited to the embodiments set forth herein; rather, these embodiments are provided so that this disclosure will satisfy applicable legal requirements.

The components illustrated in the figures represent components that may or may not be present in various embodiments of the present disclosure described herein such that embodiments may include fewer or more components than those shown in the figures while not departing from the scope of the present disclosure. Some components may be omitted from one or more figures or shown in dashed line for visibility of the underlying components.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in various embodiments," "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments or it may be excluded.

Various embodiments of the present disclosure include a conveyor system and a diverting mechanism for a conveyor. Embodiments may be configured to detect a position of one or more packages using one or more sensors. Embodiments may be configured to divert the one or more packages based on the detected position of the one or more packages. Embodiments may be configured operate in at least two modes, a diverting mode and a non-diverting mode. Embodiments may be configured to divert the one or more packages by using a belt having a plurality of cleats that rotate in a clockwise direction or in an anticlockwise direction. Embodiments may divert the one or more packages without changing orientation of the one or more packages. Embodiments may transfer the one or more packages of various size and dimensions. Additionally, embodiments may be integrated into various settings, from industrial facilities to household applications, providing a stable and accurate solution to transfer the one or more packages from one conveyor to another and while moving from one location to another.

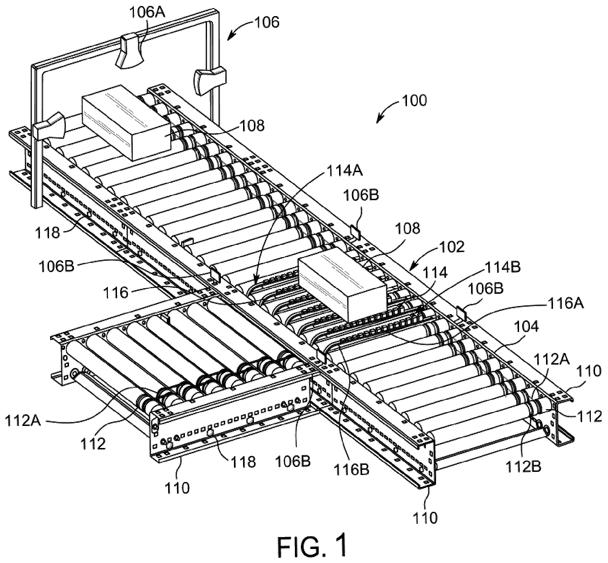

FIG. 1 illustrates an isometric view of a conveyor system 100, in accordance with an example embodiment of the present disclosure.

The conveyor system 100 may comprise a diverting mechanism 102, one or more idler rollers 104, and a scan tunnel 106. In some embodiments, the conveyor system 100 may be configured to carry one or more packages 108 in a downstream movement or in an upstream movement with the help of the one or more idler rollers 104. In some embodiments, the conveyor system 100 may be configured to divert the one or more packages 108 by using the diverting mechanism 102.

The conveyor system 100 may comprise the one or more idler rollers 104 that may be arranged between at least two longitudinal frames 110 for carrying the one or more packages 108. Further, each of the one or more idler rollers 104 may be configured with an axle (not shown) to secure attachment of the one or more idler rollers 104 with the at least two longitudinal frames 110. In some embodiments, the one or more idler rollers 104 may assist the one or more packages 108 to move from the one end to other end of the conveyor system 100. In some embodiments, the one or more idler rollers 104 may be self-powered and/or utilize at least one actuation media for carrying the one or more packages 108 to move from one end of the conveyor system 100 to other end of the conveyor system 100. In some exemplary embodiments, the at least one actuation media may correspond to at least one belt drive assembly 112.

In some embodiments, the at least one belt drive assembly 112 may be configured to provide rotational motion to the one or more idler rollers 104. Further, the one or more idler rollers 104 upon actuation from the at least one belt drive assembly 112 may cause translation of the one or more packages 108 from one end of the conveyor system 100 to another end. In some embodiments, the at least one belt drive assembly 112 may be powered by a motor (not shown). Further, actuation of the motor may initiate rotational motion of the at least one belt drive assembly 112. Such rotational motion of the at least one belt drive assembly 112 may further drive the one or more idler rollers 104 in a clockwise direction or in an anticlockwise direction. It may be noted that the at least one belt drive assembly 112 may be an arrangement of one or more belts that may be looped around the one or more idler rollers 104. In an alternative embodiment, the at least one belt drive assembly 112 may be an arrangement of one or more belts that may be looped around the axle of the one or more idler rollers 104, without departing from the scope of the disclosure.

In an exemplary embodiment, the at least one belt drive assembly 112 comprises a belt 112A that may be engaged into one or more grooves 112B. The one or more grooves 112B may be configured to secure the belt 112A within the one or more idler rollers 104. The one or more grooves 112B may be grouped towards one side of the one or more idler rollers 104. Further, the one or more grooves 112B may prevent slipping of the belt 112A from the one or more idler rollers 104. In some embodiments, the one or more idler rollers 104 may have a shape of a cylindrical body with the one or more grooves 112B machined towards the one end. Further, the one or more idler rollers 104 may be arranged equidistantly along the at least two longitudinal frames 110. The at least two longitudinal frames 110 may be configured to provide support to the one or more idler rollers 104 while carrying the one or more packages 108.

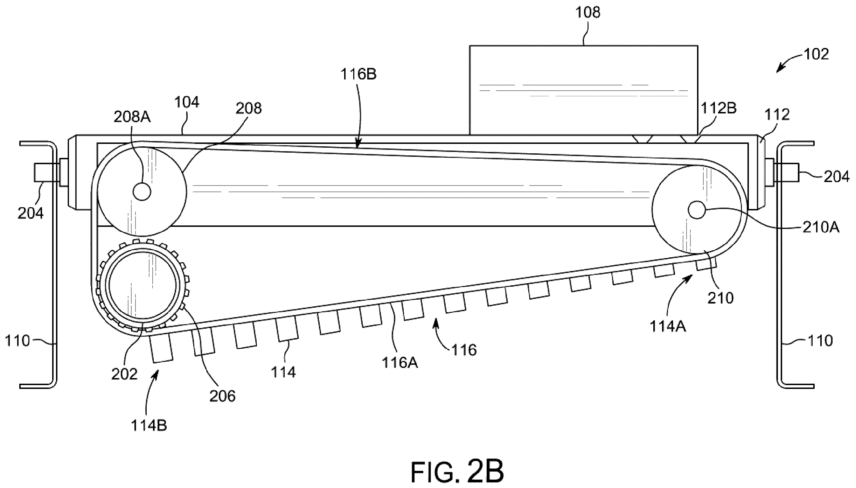

As illustrated in FIGS. 1 and 2B, the diverting mechanism 102 may comprise a plurality of cleats 114 and at least one belt 116. The plurality of cleats 114 may be positioned over the at least one belt 116 and at least partially above the one or more idler rollers 104 to divert the one or more packages 108. In some embodiments, the at least one belt 116 may be stretched around a first wheel (FIG. 2B) and a driving gear (FIG. 2B). As will be discussed further, the driving gear may be configured to rotate the at least one belt 116. In some embodiments, the plurality of cleats 114 may collectively have a variable thickness. It may be noted that the thinnest cleat of the plurality of cleats 114 may have a thickness of at least 1mm and up to 10mm, and the thickest cleat of the plurality of cleats 114 may have a thickness of at least 10mm and up to 50mm. In some example embodiments, each of the plurality of cleats 114 may be spaced apart from an adjacent cleat by a distance. The distance may be at least 1mm and up to 100mm.

Further, the plurality of cleats 114 may collectively define a first end 114A and a second end 114B. The plurality of cleats 114 may define a gradient such that the thickness of each cleat may sequentially increase from the first end 114A to the second end 114B. In some embodiments, a difference between the thickness of adjacent cleats may be at least 0 mm and up to 5 mm. Further, the difference between the thickness of each of the plurality of cleats 114 may allow the diverting mechanism 102 to divert the one or more packages 108 by maintaining orientation of the one or more packages 108. In various embodiments, the plurality of cleats 114 over the at least one belt 116 may be arranged such that a predefined number of the plurality of cleats 114 may come in contact with the one or more packages 108 to divert the one or more packages 108. In some embodiments, the predefined number of the plurality of cleats 114 may depend on the size and dimensions of the one or more packages 108.

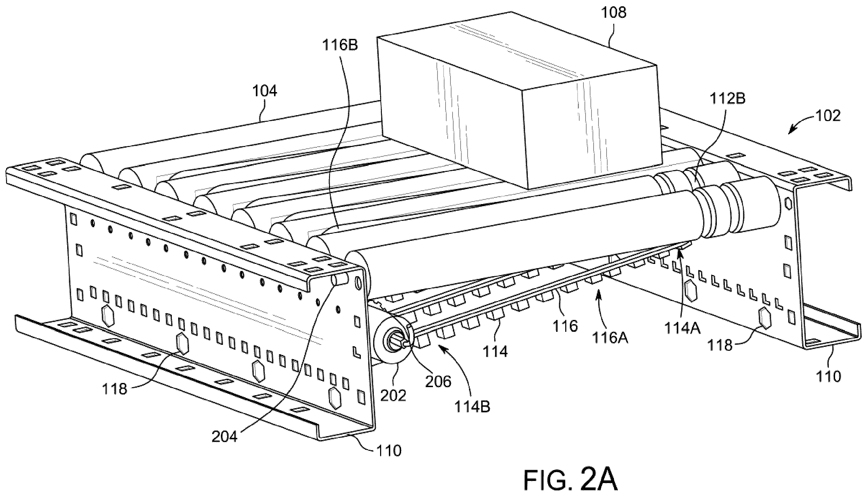

Further, the at least one belt 116 may define a width, such that a width of each of the plurality of cleats 114 may be between 10mm-100mm of the width of the at least one belt 116. Further, the at least one belt 116 may define a circumference. Further, the at least one belt 116 may have a first portion 116A and a second portion 116B. Further, the first portion 116A of the at least one belt 116 may comprise the plurality of cleats 114. The second portion 116B of the at least one belt 116 may not comprise the plurality of cleats 114. Stated differently, either the first portion 116A or the second portion 116B of the at least one belt 116 may be fabricated with the plurality of cleats 114. In some embodiments, the length of the first portion 116A may be less than a length of the second portion 116B. In some example embodiments, the diverting mechanism 102 may be configured to operate in a diverting mode and in a non-diverting mode. The detailed working of the diverting mechanism 102 will be described in conjunction with FIGS. 2A-5B.

In some embodiments, as illustrated in FIG. 1, the scan tunnel 106 may be configured to determine positioning of the one or more packages 108 while moving on the conveyor system 100. In some embodiments, the scan tunnel 106 may be operationally coupled to the diverting mechanism 102. Further, the scan tunnel 106 may comprise one or more sensors 106A, 106B communicatively coupled to a controller (not shown). In some embodiments, the one or more sensors 106A, 106B may correspond to at least one optical sensor. In some exemplary embodiments, the one or more sensors 106A, 106B may be configured to work in collaboration to determine positioning of the one or more packages 108. In various embodiments, the at least one optical sensor may comprise one or more emitters (not shown) and one or more detectors (not shown). The one or more emitters may be configured to emit one or more optical signals towards the one or more packages 108 while moving on the conveyor system 100. Further, the one or more detectors may be configured to receive the one or more optical signals reflecting from the one or more packages 108. In some embodiments, the controller may receive an input data from the one or more sensors 106A, 106B related to the positioning of the one or more packages 108. In some embodiments, the controller may activate the driving gear in the diverting mode to rotate the at least one belt 116 using the plurality of cleats 114 based at least on the input data.

In various example embodiments, the controller may include suitable logic, circuitry, and/or interfaces that are operable to execute one or more instructions stored in a memory may be electrically connected with the controller. The controller may be configured to perform predetermined operations. In some embodiments, the controller may be configured to decode and execute any instructions received from one or more other electronic devices or server(s). The controller may be configured to execute one or more computer-readable program instructions, such as program instructions to carry out any of the functions described in this description. Further, the controller may be implemented using one or more processor technologies known in the art. Examples of the controller include, but are not limited to, one or more general purpose processors (e.g., INTEL^{®} or Advanced Micro Devices^{®} (AMD) microprocessors) and/or one or more special purpose processors (e.g., digital signal processors or Xilinx^{®} System on Chip (SOC) Field Programmable Gate Array (FPGA) processor).

Further, the memory may store a set of instructions and data. In some embodiments, the memory may include the one or more instructions that are executable by the controller to perform specific operations. It is apparent to a person with ordinary skill in the art that the one or more instructions stored in the memory enable the hardware of the system to perform the predetermined operations. Some of the commonly known memory implementations include, but are not limited to, fixed (hard) drives, magnetic tape, floppy diskettes, optical disks, Compact Disc Read-Only Memories (CD-ROMs), and magneto-optical disks, semiconductor memories, such as ROMs, Random Access Memories (RAMs), Programmable Read-Only Memories (PROMs), Erasable PROMs (EPROMs), Electrically Erasable PROMs (EEPROMs), flash memory, magnetic or optical cards, or other type of media/machine-readable medium suitable for storing electronic instructions.

As illustrated in FIG. 1, the at least two longitudinal frames 110 may be fabricated with a plurality of mounting grooves 118. The plurality of mounting grooves 118 may be cut-out from the at least two longitudinal frames 110. In some embodiments, the plurality of mounting grooves 118 may be configured to allow connection of auxiliary conveyor systems and/or attachments with the at least two longitudinal frames 110. It will be apparent to one skilled in the art that above-mentioned components of the conveyor system 100 have been provided only for illustration purposes, without departing from the scope of the disclosure.

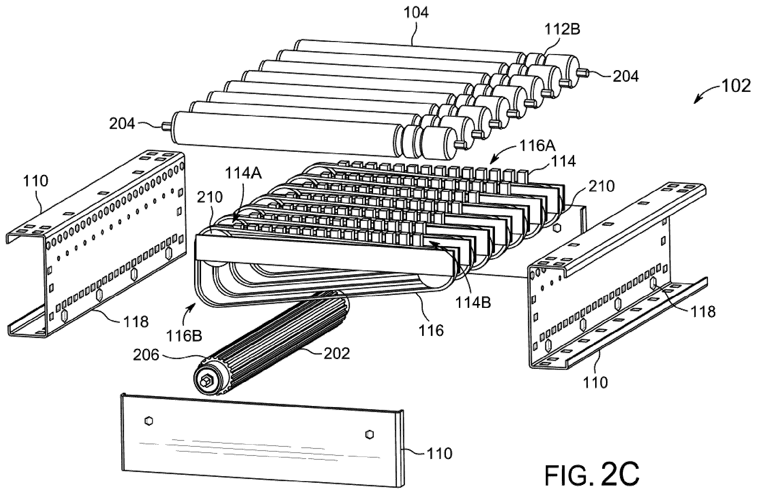

FIG.2A illustrates an isometric view of the diverting mechanism 102 integrated with the conveyor system 100, in accordance with an example embodiment of the present disclosure. FIG. 2B illustrates a side view of the diverting mechanism 102, in accordance with an example embodiment of the present disclosure. FIG. 2C illustrates an exploded view of the diverting mechanism 102, in accordance with an example embodiment of the present disclosure. FIGS. 2A-2C are described in conjunction with FIG. 1.

As discussed above, the diverting mechanism 102 may comprise a first wheel 208 (FIG. 2B), a second wheel 210 (FIG. 2B), a driving gear 202, and the at least one belt 116 stretched around at least the first wheel 208 and the driving gear 202. For example, the at least one belt 116 may be stretched around the first wheel 208, the second wheel 210, and the driving gear 202. Further, and as discussed, the at least one belt 116 may have the plurality of cleats 114. Further, the driving gear 202 may be configured to rotate the at least one belt 116. In some embodiments, the driving gear 202 may be configured to drive the first wheel 208 and the second wheel 210 by rotating the at least one belt 116 in clockwise or anticlockwise directions.

As illustrated in FIG. 2A, the one or more idler rollers 104 may be coupled between the at least two longitudinal frames 110. The at least two longitudinal frames 110 may be provided with one or more provisions (not shown) for receiving either ends of the one or more idler rollers 104. Further, each of the one or more idler rollers 104 may comprise extended portions 204 disposed at the either ends of each of the one or more idler rollers 104. Such extended portions 204 may be received by the one or more provisions of the at least two longitudinal frames 110. In various embodiments, the one or more provisions may correspond to the plurality of mounting grooves 118, as described herein. In some other embodiments, the one or more provisions may correspond to holes or slots cut-out or machined along the length of the at least two longitudinal frames 110.

Further, the at least one belt 116 may comprise the first portion 116A and the second portion 116B. The first portion 116A of the at least one belt 116 with the plurality of cleats 114 may be positioned downwards and the second portion 116B of the at least one belt 116 may be positioned in between the one or more idler rollers 104. Such positioning of the first portion 116A and the second portion 116B with respect to the plurality of cleats 114 may correspond to the non-diverting mode. Further, the driving gear 202 may comprise a plurality of teeth 206 that may be configured to provide friction to drive the at least one belt 116.

As illustrated in FIG. 2B, the diverting mechanism 102 may comprise the driving gear 202 having the plurality of teeth 206, a first wheel 208, and a second wheel 210. In some embodiments, the first wheel 208 and the second wheel 210 may correspond to pulleys having grooved structure (not shown) to prevent slipping of the at least one belt 116 while rotating along the first wheel 208 and second wheel 210. In some embodiments, the first wheel 208 may be configured with a first axle 208A to secure attachment of the first wheel 208 with the one or more idler rollers 204. In some embodiments, the second wheel 210 may be configured with a second axle 210A to secure attachment of the second wheel 210 with the one or more idler rollers 204.

In some embodiments. the first wheel 208 may be further connected to the second wheel 210 via the at least one belt 116 such that the first portion 116A and the second portion 116B of the at least one belt 116 may be disposed between the first wheel 208 and the second wheel 210. In some embodiments, the driving gear 202 may be configured to drive the first wheel 208 and the second wheel 210 by rotating the at least one belt 116 in clockwise or anticlockwise direction. In some exemplary embodiments, during rotations of the at least one belt 116, the plurality of cleats 114 move with the at least one belt 116.

In various exemplary embodiments, the driving gear 202 may be operationally coupled with at least one motor drive (not shown) that may be controlled by the controller. In some embodiments, the controller may receive information regarding the position of the one or more packages 108 from the one or more sensors. Further, based on the received information the controller may activate the driving gear 202. The driving gear 202 may provide rotational motion to the at least one belt 116 in the anticlockwise direction that may allow diverting of the one or more packages 108 from one end of the conveyor system 100 to another end of the conveyor system 100. In some embodiments, the plurality of cleats 114 may be positioned at least partially above the one or more idler rollers 104 to divert the one or more packages 108 from the one or more idler rollers 104. In some embodiments, the plurality of cleats 114 may be made from a material selected from a group of materials such as, but is not limited to, rubber, polymer, plastic, steel, or wood.

As discussed earlier, the diverting mechanism 102 may be communicatively coupled with the controller. Further, the controller may direct the diverting mechanism 102 to operate in the diverting mode and in the non-diverting mode based at least on the detected positioning of the one or more packages 108. In the non-diverting mode, the at least one belt 116 may be positioned such that each of the plurality of cleats 114 may be positioned below the first wheel 208, the driving gear 202, or both. In this case, the driving gear 202 may be configured to remain in an idle state. Further, the idle state of the driving gear 202 may restrict movement of the first wheel 208, the at least one belt 116, and the second wheel 210 and thereby allowing the one or more packages 108 to move without diverting from one end of the conveyor system 100 to another end using of the one or more idler rollers 104.

In the diverting mode, the at least one belt 116 may be rotating around at least the first wheel 208 and the driving gear 202 such that each of the plurality of cleats 114 may be positioned over the first wheel 208, the driving gear 202, or both. Further, the driving gear 202 may facilitate movement of the first wheel 208, the at least one belt 116, and the second wheel 210 and thereby directing the one or more packages 108 towards a diversion from one end of the conveyor system 100 to another end using the at least one belt 116.

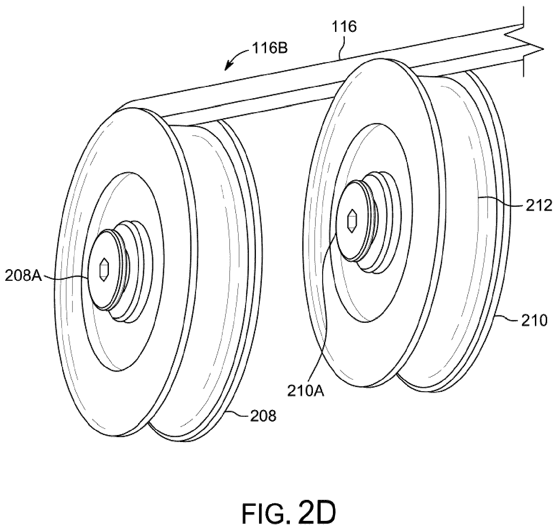

FIG. 2D illustrates the at least one belt 116 stretched around the first wheel 208 and the second gear 210 of the diverting mechanism 102, in accordance with an example embodiment of the present disclosure. FIG. 2D is described in conjunction with FIGS. 1-2C.

The first wheel 208 may be positioned above the driving gear 202, as shown in FIG. 2B, such that the rotation of the first wheel 208 may impart rotation of the second wheel 210. As discussed earlier, the first wheel 208 and the second wheel 210 may also be referred as pulleys having a grooved structure 212. Such grooved structure 212 may prevent skidding or slipping of the at least one belt 116 that may be wound around the first wheel 208 and the second wheel 210.

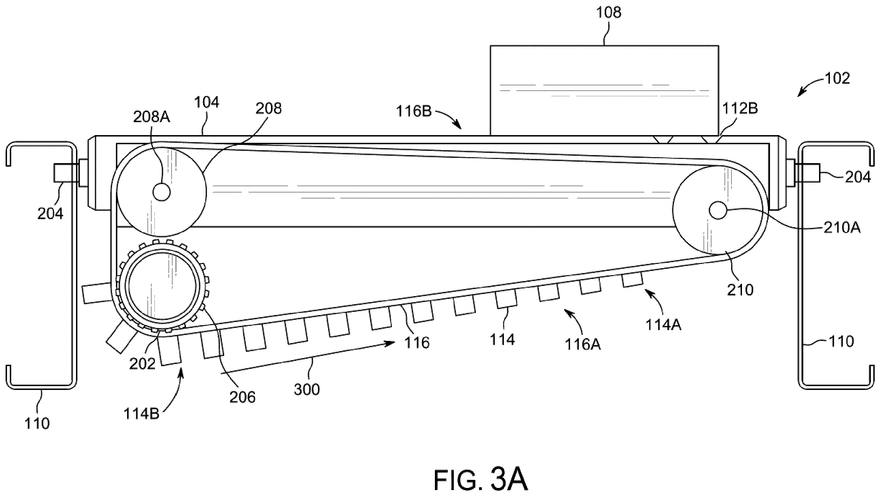

FIGS. 3A-3C illustrate side views of operation of the diverting mechanism 102 as the diverting mechanism 102 transitions from the non-diverting mode to the diverting mode, in accordance with an example embodiment of the present disclosure. FIGS. 3A-3C are described in conjunction with FIGS. 1-2D.

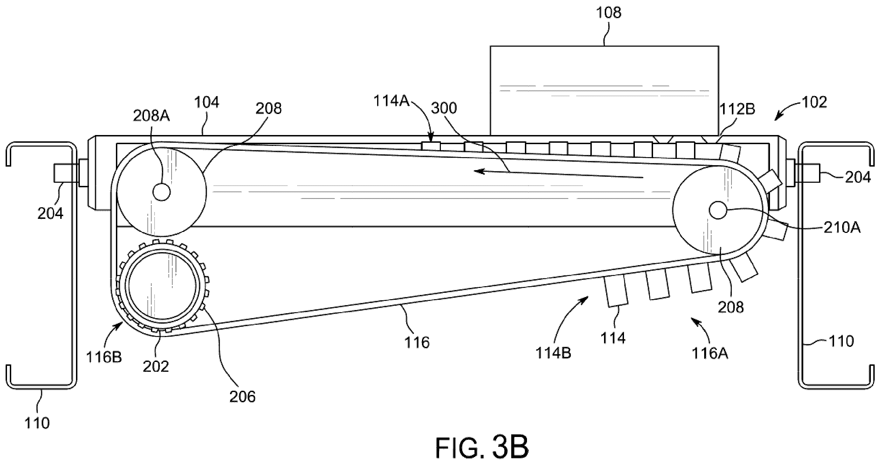

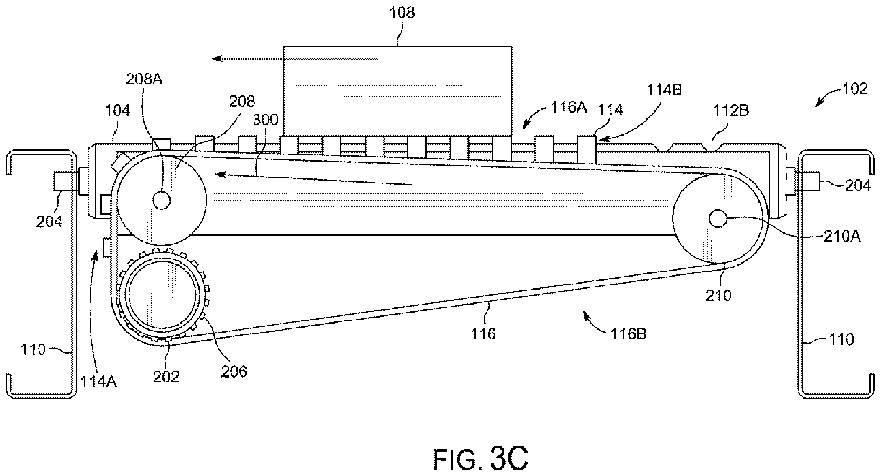

As discussed earlier, the controller may be configured to receive the input data from the one or more sensors 106A, 106B related to the positioning of the one or more packages 108. Further, the controller may activate the driving gear 202 in the diverting mode to rotate the at least one belt 116 having the plurality of cleats 114 in the anticlockwise direction based at least on the input data. In some embodiments, when the diverting mechanism 102 may operate in the diverting mode, the at least one belt 116 may rotate around the first wheel 208 and the driving gear 202 in anticlockwise direction as shown by an arrow 300. In this case, at least one of the plurality of cleats 114 may have a position that is higher than the first wheel 208, the second wheel 210, or both as shown in FIGS. 3B and 3C.

As illustrated in FIGS. 3B-3C, the anticlockwise rotation of the at least one belt 116 may position at least one of the cleats 114 higher than the one or more idler rollers 104 to divert the one or more packages 108 from the one or more idler rollers 104. In some embodiments, during the anticlockwise rotation of the at least one belt 116, the one or more packages 108 may be diverted from one conveyor to another conveyor using the plurality of cleats 114. In some embodiments, during the anticlockwise rotation of the at least one belt 116, a predefined number of the plurality of cleats 114 may come in contact with the one or more packages 108 to divert the one or more packages 108. Further, the predefined number of cleats 114 may be configured to lift and divert the one or more packages 108 from one end of the conveyor system 100 to another end. In an exemplary embodiment, upon activation of the diverting mode, the first end 114A of the plurality of cleats 114 may first start to position over the one or more idler rollers 104 and the second end 114B of the plurality of cleats 114 may follow the first end 114A of the plurality of cleats 114 to position over the one or more idler rollers 104 and divert the one or more packages 108.

In various examples, and with reference to FIG. 3C, the position of the first wheel 208 may be higher than the position of the second wheel 210. The difference in the height position of the first wheel 208 and the second wheel 210 may be substantially equal to (e.g., within manufacturing or engineering tolerances) a thickness of the thickest cleat 114. In various examples, the height difference between the first wheel 208 and the second wheel 210 may define a first angle relative to a horizontal plane. The plurality of cleats 114 of variable thickness may collectively define a second angle relative to a main body of the at least one belt. The first angle may correspond to the second angle (e.g., the first angle and the second angle may be opposite angles). As such, and as best seen in FIG. 3C, when the diverting mechanism is in the diverting mode, the tops of each of the plurality of cleats 114 may be aligned along a horizontal plane. As such, at least some of the plurality of cleats may make contact with the package 108 to be diverted at the same time. This configuration has various benefits. For example, this configuration may reduce a likelihood of damage to the one or more packages 108 being diverted because each package 108 is gently lifted upward by the cleats 114 and is not pushed to the side by the cleats 114.

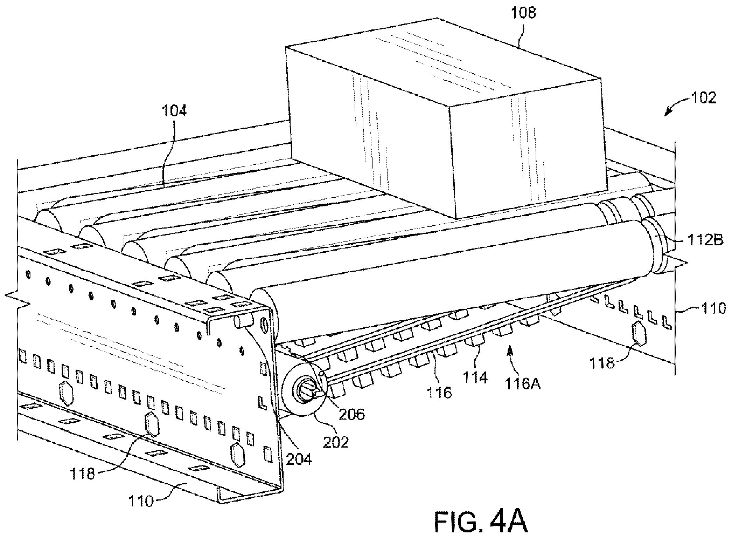

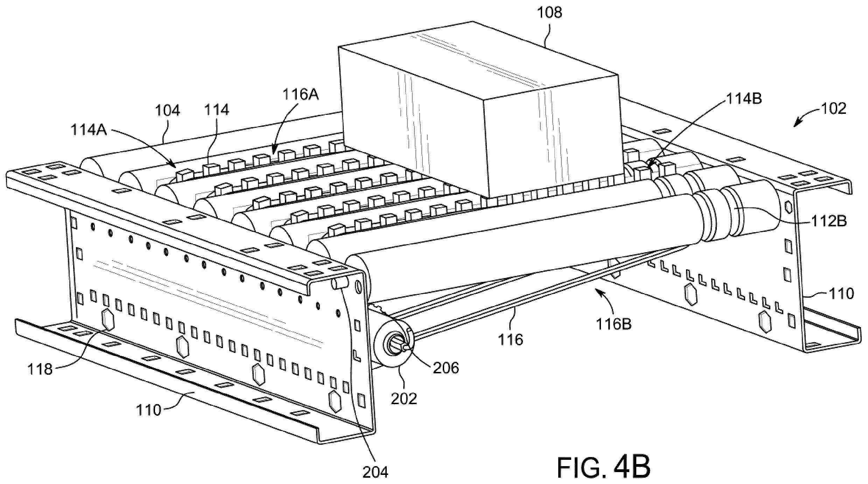

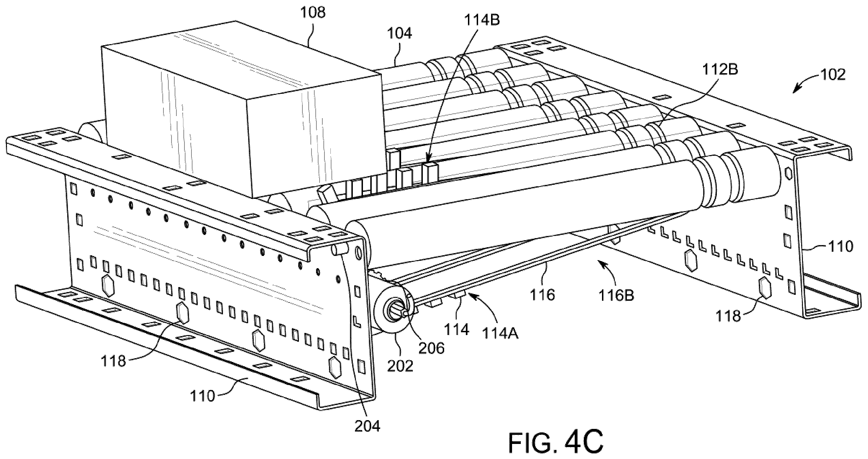

FIGS. 4A-4C illustrate isometric views of operation of the diverting mechanism in the diverting mode, in accordance with an example embodiment of the present disclosure. FIGS. 4A-4C are described in conjunction with FIGS. 1-3C.

In some embodiments, the difference between the thickness of each of the plurality of cleats 114 allows the diverting mechanism to divert one or more packages 108 by maintaining orientation of the one or more packages 108. As discussed in FIGS. 3A-3C, the plurality of cleats 114 on the at least one belt 116 may be arranged in such a manner that a predefined number of the plurality of cleats 114 may come in contact with the one or more packages 108 to divert the one or more packages 108. In some embodiments, the predefined number of the plurality of cleats 114 may depend on the size and dimensions of the one or more packages 108.

As discussed above, the driving gear 202 is configured to drive the first wheel 208 and the second wheel 210 by rotating the at least one belt 116 in anticlockwise direction. Further, during rotations of the at least one belt 116 in the anticlockwise direction, the one or more packages 108 may be diverted from right to left direction. In an exemplary embodiment, the rotational direction of the driving gear 202 may be controlled by the controller. Further, the rotations of the driving gear 202, the first wheel 208, the second wheel 210, and at least one belt 116 depends upon application and settings of the diverting mechanism 102 and conveyor system 100. As such, the driving gear 202, the first wheel 208, the second wheel 210, and the at least one belt 116 may rotate clockwise to divert one or more packages 108.

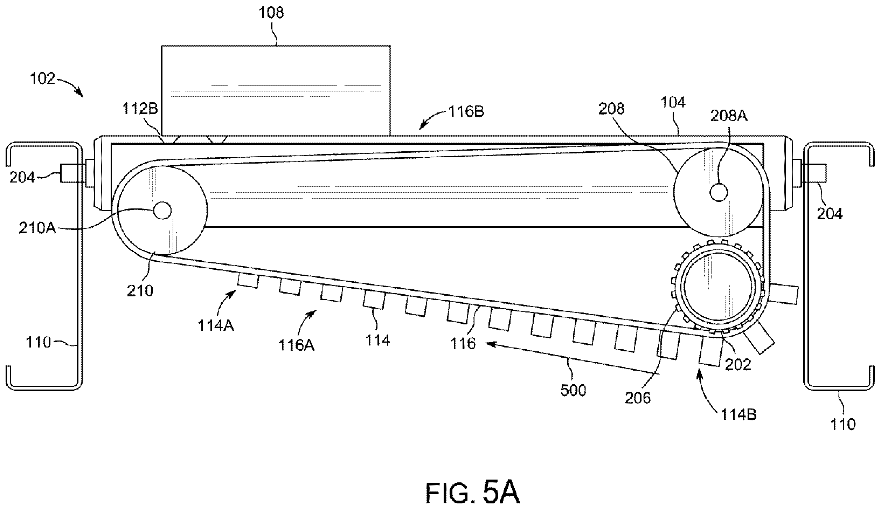

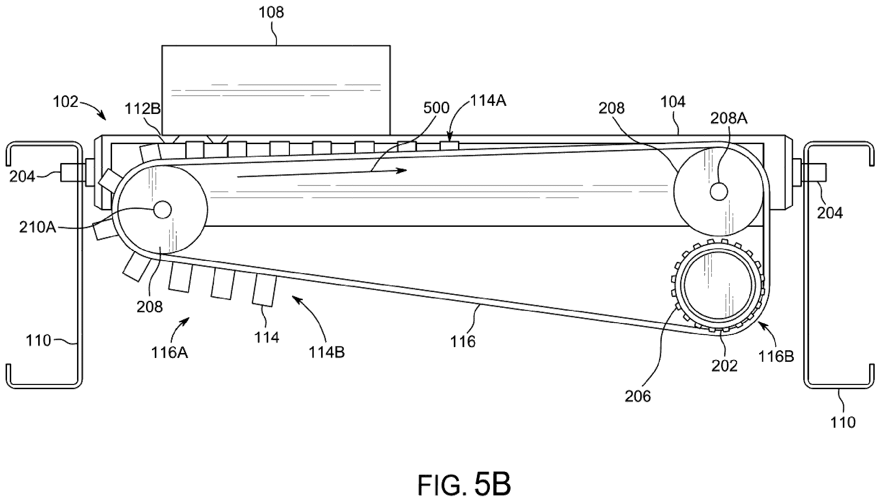

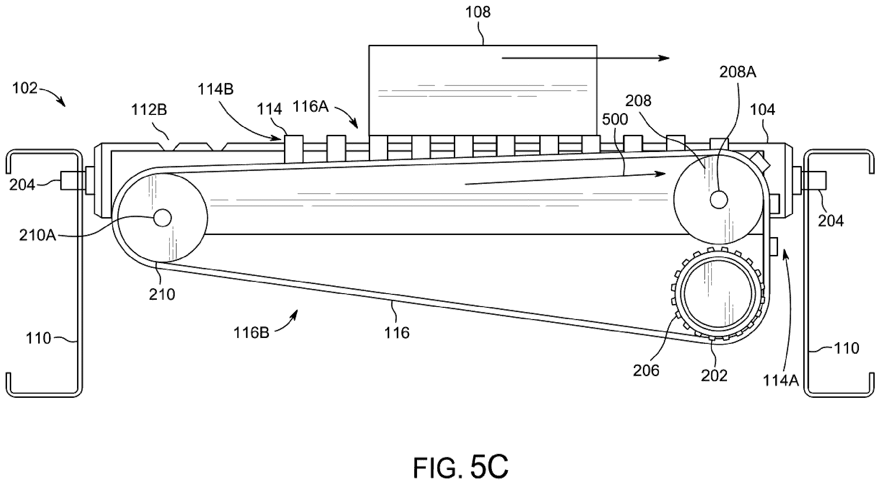

FIGS. 5A-5C illustrate another side views of operation of the diverting mechanism 102 in the diverting mode, in accordance with an example embodiment of the present disclosure. FIGS. 5A-5C are described in conjunction with FIGS. 1-4C.

In some embodiments, the diverting mechanism 102 may be integrated within the conveyor system 100 in such a configuration that translates the one or more packages to another conveyor.

As illustrated, the at least one belt 116 may move in a clockwise direction shown by an arrow 500. In the diverting mode, the driving gear 202, the first wheel 208, the second wheel 210, and the at least one belt 116 may rotate in the clockwise direction. In some exemplary embodiments, during the clockwise rotation of the at least one belt 116, the one or more packages 108 may be diverted from the conveyor. In an exemplary embodiment, the rotational direction of the driving gear 202 may be controlled by the controller. Further, the rotations of the driving gear 202, the first wheel 208, the second wheel 210 and at least one belt 116 may depend upon application and settings of the diverting mechanism 102 and conveyor system 100.

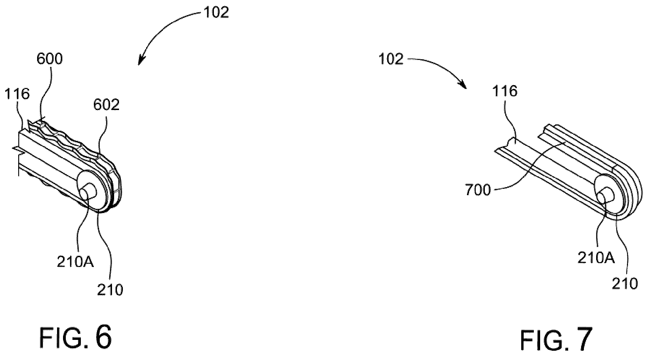

FIG. 6 illustrates another embodiment of the diverting mechanism 102 comprising a plurality of another cleats 600 and at least one pair of sidewalls 602 monolithic with the at least one belt 116, in accordance with an example embodiment of the present disclosure. FIG. 7 illustrates another embodiment of the diverting mechanism 102 comprising at least one belt 116 fabricated with another plurality of cleats 700, in accordance with an example embodiment of the present disclosure. FIGS. 6 and 7 are described in conjunction with FIGS. 1-5C.

In another embodiment, the diverting mechanism 102 may comprise the plurality of another cleats 600 and the at least one pair of sidewalls 602. Further, the plurality of another cleats 600 and the at least one pair of sidewalls 602 may be monolithic with the at least one belt 116. In some embodiments, the plurality of another cleats 600 and the at least one pair of sidewalls 602 may be crafted with a variable thickness. Further, in the diverting mode the driving gear 202, the first wheel, the second wheel 210, and the at least one belt 116 may rotate in clockwise or anticlockwise direction. In the diverting mode the plurality of another cleats 600 and the at least one pair of sidewalls 602 comes in contact with the one or more packages 108. In some embodiments, the at least one pair of sidewalls 602 may be crafted with a shape that may be selected from a group of shapes such as, but not limited to a sinusoidal shape. Further, the sinusoidal shape of the at least one pair of sidewalls 602 may be configured to provide grip to the diverting mechanism 102 while diverting the one or more packages 108.

As illustrated in FIG. 7, the at least one belt 116 may be crafted with the another plurality of cleats 700. In some embodiments, the another plurality of cleats 700 may be constructed with a variable thickness. In diverting mode, the another plurality of cleats 700 may come in contact with the one or more packages 108.

In some alternate embodiments, the diverting mechanism 102 of the conveyor system 100 may be simple in operation with a minimalistic configuration of parts. Such simplicity streamlines the conveyor system 100 and also contributes significantly to cost savings by obviating the need for elaborate lifting mechanisms. In some alternate embodiments, the elimination of intricate mechanical and electrical components further underscores its economic benefits, translating into substantial savings. Additionally, the diverting mechanism 102 facilitates labor cost savings through reduced assembly time and simplified maintenance procedures. In some embodiments, the conveyor system 100 may be a compact design that optimizes space utilization and enhances overall efficiency, making it a versatile and cost-effective solution for various applications.

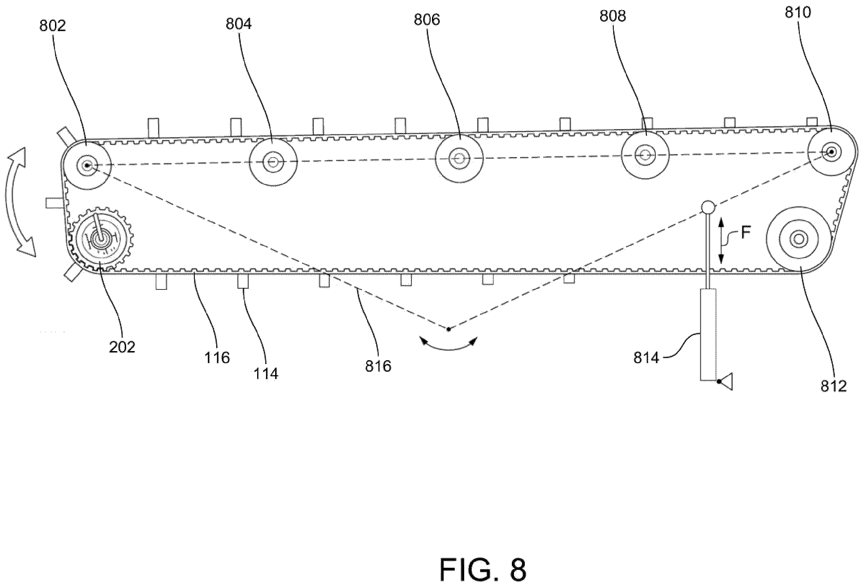

FIG. 8 illustrates a side view of another embodiment of the diverting mechanism that includes a tilting functionality for diverting packages in either a first or second direction, in accordance with an example embodiment of the present disclosure. In some embodiments, the diverting mechanism may include a driving gear 202, a first wheel 802, a second wheel 804, a third wheel 806, a fourth wheel 808, a fifth wheel 810, and a sixth wheel 812. A belt 116 may be stretched around or otherwise coupled with the driving gear 202, the first wheel 802, the second wheel 804, the third wheel 806, the fourth wheel 808, the fifth wheel 810, and the six wheel 812. Although some examples described herein include six wheels, any number of wheels may be used without loss of meaning. For example, one embodiment may include a driving gear 202 and the first wheel 802, with the belt 116 wrapped around the driving gear 202 and the first wheel 802.

As described herein, the wheels and the driving gear 202 may be coupled with a frame 816. The frame 816 may support or otherwise stabilize the driving gear 202 and the wheels. For example, the driving gear 202 and the wheels may each have axels, which may be fitted into or otherwise coupled with the frame 816, allowing each wheel and the driving gear 202 to rotate in a clockwise and/or anticlockwise direction. In some embodiments, the diverting mechanism may include an angle adjustment component 814 (e.g., a linear actuator), which may be coupled with the frame 816. The angle adjustment component 814 may be configured to receive one or more control signals from a controller and adjust an angular orientation of the frame 816 in response to the one or more control signals. In some embodiments, the angle adjustment component 814 may adjust an angular orientation of the frame 816 based on a diverting direction of the diverting mechanism. For example, to divert one or more objects in a first direction (e.g., to the right), the angle adjustment component 814 may position the frame 816 such that the first wheel 802 is below the second wheel 804 (e.g., a height of the first wheel 802 is less than a height of the second wheel 804). In such a configuration, the belt 116 may rotate in a clockwise direction. To divert one or more objects in a second direction (e.g., to the left), the angle adjustment component 814 may position the frame 816 such that the first wheel 802 is above the second wheel 804 (e.g., a height of the first wheel 802 is greater than a height of the second wheel 804). In such a configuration, the belt 116 may rotate in an anticlockwise direction.

In some embodiments, the belt 116 may include one or more first geometrical features (e.g., cleats 114) configured to move one or more objects in a first direction (e.g., to the right) and one or more second geometrical features (e.g., cleats 114) configured to move one or more objects in a second direction opposite to the first direction (e.g., to the left). As described herein, the one or more geometrical features may include one or more cleats. In some other examples, other geometrical designs may be utilized. For example, a geometrical feature may be a flat strip with a variable thickness, or any other type of geometrical feature, such as the geometrical features described with reference to FIGs. 6 and 7.

As described herein, a thickness of each cleat 114 may be selected such that the diverting mechanism may divert objects in a first direction while the belt 116 rotates in a clockwise direction and divert objects in a second direction while the belt 116 rotates in an anticlockwise direction. Additionally, the angle adjustment component 814 may cause the frame 816 to be positioned in a first position (e.g., in a first configuration) to divert the objects in the first direction and a second position (e.g., in a second configuration) to diver the objects in the second direction. To enable objects to be selectively diverted in either the first direction or the second direction, a first portion of the cleats 114 may have increasing thicknesses (e.g., as viewed in an anticlockwise direction around the belt 116) and a second portion of the cleats 114 may have decreasing thicknesses (e.g., as viewed in an anticlockwise direction around the belt).

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. An apparatus comprising:
a first wheel;
a driving gear;
a belt stretched around the first wheel and the driving gear, the belt comprising one or more first geometrical features configured to move an object in a first direction while the belt is rotating in a first rotational direction and one or more second geometrical features configured to move the object in a second direction while the belt is rotating in a second rotational direction, wherein the driving gear is configured to rotate the belt in the first rotational direction and the second rotational direction; and
an angle adjustment component configured to adjust an angular orientation of at least a portion of the belt based at least in part on whether the belt is rotating in the first rotational direction or the second rotational direction.

2. The apparatus of claim 1, further comprising:
a frame that is physically coupled with (i) the first wheel via an axel of the first wheel and (ii) the driving gear via an axel of the driving gear, wherein the angle adjustment component adjusts the angular orientation of the at least the portion of the belt by adjusting an orientation of the frame.

3. The apparatus of claim 1, wherein the one or more first geometrical features comprise a first plurality of cleats of variable thickness and the one or more second geometrical features comprise a second plurality of cleats of variable thickness.

4. The apparatus of claim 3, wherein a thinnest cleat of the first plurality of cleats has a thickness of at least 1mm and up to 10mm, and wherein a thickest cleat of the first plurality of cleats has a thickness of at least 10mm and up to 50mm.

5. The apparatus of claim 3, wherein a thinnest cleat of the second plurality of cleats has a thickness of at least 1mm and up to 10mm, and wherein a thickest cleat of the second plurality of cleats has a thickness of at least 10mm and up to 50mm.

6. The apparatus of claim 3, wherein:
respective thicknesses of each cleat in the first plurality of cleats incrementally increase in an anticlockwise direction around the belt; and
respective thicknesses of each cleat in the second plurality of cleats incrementally decrease in the anticlockwise direction around the belt.

7. The apparatus of claim 3, wherein a difference between a thickness of adjacent cleats is at least 0mm and up to 5mm.

8. The apparatus of claim 1, wherein the one or more first geometrical features are configured to maintain an orientation of the object while diverting the object from a first conveyer to a second conveyer.

9. The apparatus of claim 3, further comprising a second wheel, wherein:
a position of the first wheel is lower than a position of the second wheel in a first angular configuration for diverting the object in the first direction; and
the position of the first wheel is higher than the position of the second wheel in a second angular configuration for diverting the object in the second direction.

10. The apparatus of claim 3, further comprising a second wheel, wherein:
a position of the first wheel is lower than a position of the second wheel,
a height difference between the first wheel and the second wheel defines a first angle relative to a horizontal plane,
the first plurality of cleats collectively defines a second angle relative to the belt, and
the first angle corresponds to the second angle.

11. The apparatus of claim 10, wherein the driving gear is configured to drive the first wheel and the second wheel by rotating the belt in a clockwise or an anticlockwise direction.

12. The apparatus of claim 1, wherein the belt defines a width, wherein a width of the one or more first geometrical features is within 10-100mm of the width of the belt.

13. The apparatus of claim 3, wherein each of the first plurality of cleats is spaced apart from an adjacent cleat by a distance, wherein the distance is at least 1mm and up to 100mm.

14. The apparatus of claim 1, wherein the belt defines a circumference, wherein a first portion of the belt comprises the one or more first geometrical features and a second portion of the belt adjacent to the first portion comprises the one or more second geometrical features.

15. A conveyer system comprising:
a diverting mechanism comprising:
a first wheel;
a driving gear; and
a belt stretched around the first wheel and the driving gear, the belt having a first plurality of cleats configured to move an object in a first direction and a second plurality of cleats configured to move the object in a second direction opposite the first direction;
and
one or more idler rollers installed between at least two longitudinal frames for carrying the object in a third direction perpendicular to the first direction and the second direction,
wherein the first plurality of cleats is positioned at least partially above the one or more idler rollers for a duration to move the object in the first direction.
